# EUROPEAN PATENT APPLICATION

(11) **EP 0 751 328 A1**
(43) Date of publication of application: **02.01.1997**
(21) Application number: 96304805.3
(22) Date of filing: 28.06.1996
(51) Int. Cl.: F16L 15/04

(54) **Improvements in or relating to threaded couplings**

(30) Priority: 29.06.1995 GB 9513257
(71) Applicant: Guest, John Derek, Maidenhead, Berkshire SL6 2RX (GB)
(72) Inventor: Guest, John Derek, Maidenhead, Berkshire SL6 2RX (GB)
(74) Representative: Bayliss, Geoffrey Cyril

(57) **Abstract**

The disclosure relates to a threaded coupling comprising a connector body (10) having an externally threaded shank (11) to receive or engage in an internally threaded element (14). The threaded shank is formed to be engageable with a range of standard threads in the internally threaded element and the shank terminates at one end in an annular shoulder with an annular groove encircling the shank between the thread and shoulder and an annular seal (16) is located in the groove. The shank has a forward end which is first to receive or engage in the internally threaded element, and the diameter of the shank decreases towards its forward end with a taper substantially equal to 1 in 16.

## Description

This invention relates to threaded couplings such as couplings between a connector body and an internally threaded component, the connector body having a cylindrical shank formed with an external thread which is universal, that is to say capable of cooperating with any one of a number of standard forms of thread formed in an appropriately sized internally threaded component.

European Patent Publication No. 0370641 discloses a pipe joint having a screw in portion with an external screw thread cut on its outer surface to be screwed into a pipe thread in a fluid apparatus. The pipe joint has a contact surface at the base of the screw in portion which comes into contact with the surface of the fluid apparatus when the external thread is screwed into the fluid apparatus. A groove is provided next to the contact surface and a sealing member is located in the groove and adapted to form a non-leaking seal between the screw-in portion and fluid apparatus. The external thread on the screw-in portion is capable of meshing with the innermost of the internal pipe threads of a number of different standard types of thread having the same nominal diameter, the profile of the external thread being determined by overlapping the profiles of said internal thread so that they are axially aligned and their gauge planes coincide.

An object of the present invention is to provide a coupling having an externally threaded shank capable of meshing with an internally threaded element having a variety of different thread forms in which a much simplified adaptation of the thread on the shank is provided for engagement with the internally threaded elements.

This invention provides a threaded coupling comprising a connector body having an externally threaded shank to receive or engage in an internally threaded element, the threaded shank being formed to be engageable with a range of standard threads in the internally threaded element, the shank terminating at one end in an annular shoulder with an annular groove encircling the shank between the thread and shoulder and an annular seal being located in the groove, the shank having a forward end which is first to receive or engage in the internally threaded element, wherein the diameter of the shank decreases towards its forward end with a taper substantially equal to 1 in 16.

According to a further feature of the invention the bottom face of the annular groove in the shank may be formed with a non-smooth surface to grip with the inner surface of the seal.

Preferably, the forward end of a shank is provided with a chamfer.

Preferably, a second chamfer is provided at the rearward end of the thread.

In another aspect of the invention, the thread form on the shank has a ratio of thread height to pitch which is substantially equal to 0.64:1.

The following is a description of a specific embodiment of the invention, reference being made to the accompanying drawings, in which:
Figure 1 is a side view of an externally threaded connector body;
Figure 2 is a cross-sectional view through part of the connector body and internally threaded component; and
Figure 3 is an enlarged cross-sectional view through part of the thread form on the connector body.

The drawings show a connector body 10 formed with an elongated hollow shank 11 having an external screw thread 12.

The externally threaded shank engages in a threaded bore 13 formed an adaptor block 14 for linking the connector body 10 with another component.

The thread in the bore 13 of the adaptor block 14 may be any one of a number of standard threads including British Standard Pipe (BSP), British Standard Pipe Taper (BSPT), National Pipe Taper (NPT), Pipe Taper (PT) and PF.

The shank 11 on the connector body 10 terminates at one end in an encircling flange 15 which overlies the open end of the threaded bore 13 in the adaptor block 14.

A thread seal indicated generally at 16 is located on the shank 11 adjacent the flange 15 to seal the open end of the threaded bore 13. An example of a suitable thread seal is shown in EP 0554111.

The forward end 17 of the shank 11 which is the first to receive or engage in the threaded bore 13 is formed with a chamfer 18. A second chamfer 19 is formed at the rearward end of the thread 12 adjacent to the thread seal 16.

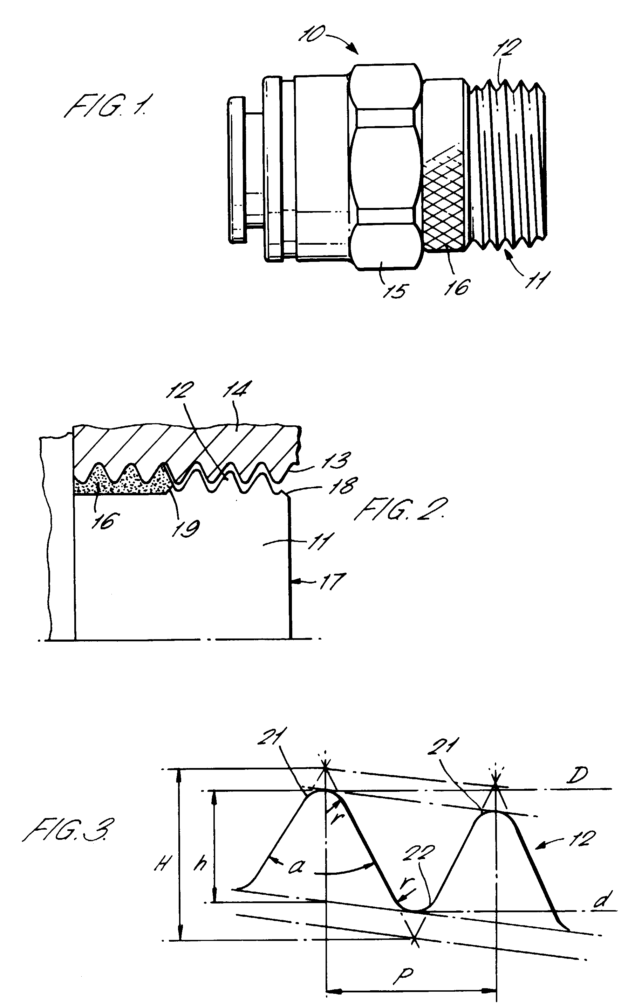

A portion of the thread form 12 on shank 11 is shown enlarged in Figure 3.

The threads are of substantially triangular form but have a radius at the crests 21 and a fillet in the valleys 22, with the same radius of curvature r. The shank 11 has a major gauge diameter D measured at the crests 21 of the thread 12 and a minor gauge diameter d measured at the valleys 22. Therefore, the thread height h is equal to half of the difference between the major gauge diameter D and the minor gauge diameter d.

The ratio of the thread height h to the pitch P of the thread form is preferably substantially equal to 0.64:1 and the angle a between the inclined sides of each thread is substantially equal to 55°.
However, other ratios and hence angles could be used.

The theoretical thread height H, i.e. if the crests 21 were not radiused and the valleys 22 were not filleted, is substantially equal to 0.96 P. The radius of curvature r is substantially equal to 0.14 P.

As shown to an exaggerated extent in Figure 3, the major and minor gauge diameters D, d decrease towards the forward end 17 of the shank 11 with a taper substantially equal to 1 in 16.

The arrangement provides a threaded component capable of cooperating with any known standard thread of appropriate size and an effective sealing system which does away with the need for time consuming sealing tape or sealants and provides a seal which can be sealed and re-sealed many times. The number of component parts to the fitting is reduced to a minimum and the risk of using a component having the wrong form of thread causing potential thread damage to a component has been for all practical purposes eliminated.

## Claims

1. A threaded coupling comprising a connector body having an externally threaded shank to receive or engage in an internally threaded element, the threaded shank being formed to be engageable with a range of standard threads in the internally threaded element, the shank terminating at one end in an annular shoulder with an annular groove encircling the shank between the thread and shoulder and an annular seal being located in the groove, the shank having a forward end which is first to receive or engage in the internally threaded element, wherein the diameter of the shank decreases towards its forward end with a taper substantially equal to 1 in 16.

2. A threaded coupling as claimed in claim 1, wherein the bottom face of the annular groove in the shank is formed with a non-smooth surface to grip with the inner surface of the seal.

3. A threaded coupling as claimed in claim 1 or claim 2, wherein the forward end of the shank is provided with a chamfer.

4. A threaded coupling as claimed in any preceding claim, wherein a second chamfer is provided at the rearward end of the thread.

5. A threaded couplinq as claimed in any preceding claims, wherein the thread form on the shank has a ratio of thread height to pitch which is substantially equal to 0.64:1.
